# EUROPEAN PATENT APPLICATION

(11) **EP 4 333 097 A1**
(43) Date of publication of application: **06.03.2024**
(21) Application number: 22841451.2
(22) Date of filing: 14.07.2022
(51) Int. Cl.: H01M 4/13

(54) **DRY PROCESS-BASED BATTERY POLE PIECE AND BATTERY**

(30) Priority: 15.07.2021 CN 202121615791 U
(71) Applicant: BYD Company Limited, Shenzhen, Guangdong 518118 (CN)
(72) Inventor: HU, Yiwei, Shenzhen Guangdong 518118 (CN); GUO, Zizhu, Shenzhen Guangdong 518118 (CN); PAN, Yi, Shenzhen Guangdong 518118 (CN); ZHANG, Jianchang, Shenzhen Guangdong 518118 (CN); SUN, Huajun, Shenzhen Guangdong 518118 (CN)
(74) Representative: DehnsGermany Partnerschaft von Patentanwälten
(86) International application number: PCT/CN2022/105666
(87) International publication number: WO 2023/284818

(57) **Abstract**

A dry battery electrode plate and a battery are provided. The dry battery electrode plate includes: a metal current collector and a self-supporting electrode film. The metal current collector is provided with pores. The self-supporting electrode film includes a first electrode film and a second electrode film. The first electrode film is arranged on one side of the metal current collector. The second electrode film is arranged on one side of the metal current collector facing away from the first electrode film. The first electrode film and the second electrode film are configured to be press-fit connected by an external force. The first electrode film and the second electrode film are attached to the metal current collector. The first electrode film and the second electrode film are connected to each other at positions corresponding to the pores.

## Description

### CROSS-REFERENCE TO RELATED APPLICATION

This application claims priority to and benefits of Chinese Patent Application No. 202121615791.0, filed on July 15, 2021. The entire content of the above-referenced application is incorporated herein by reference.

### FIELD

The present disclosure relates to the field of batteries, and specifically to a dry battery electrode plate and a battery.

### BACKGROUND

In a conventional process of preparing a battery electrode plate, an electrode material is mixed with a conductive agent and other raw materials to form an electrode film, and then an adhesive is applied on a surface of a current collector or applied between the current collector and the electrode film to adhere the electrode film and the current collector, to form an electrode plate.

Due to the existence of the adhesive layer, the contact area between the current collector and the electrode film is reduced, and the electrical conductivity of the battery electrode plate is reduced. In addition, the proportion of inactive materials is increased, leading to a reduced energy density. The number of procedures for preparing the battery electrode plates is also increased, leading to increased production costs.

However, if the adhesion using the adhesive is not used, the connection between the electrode film and the current collector is not tight, and the electrode film is likely to separate from the current collector, affecting the structural stability of the battery electrode plate.

Therefore, it is necessary to improve the structure of the battery electrode plate.

### SUMMARY

An objective of the present disclosure is to provide new technical solutions of a dry battery electrode plate and a battery.

A first aspect of the present disclosure provides a dry battery electrode plate, including

a metal current collector and a self-supporting electrode film. The metal current collector is provided with pores.

The self-supporting electrode film includes a first electrode film and a second electrode film. The first electrode film is arranged on one side of the metal current collector. The second electrode film is arranged on one side of the metal current collector facing away from the first electrode film.

The first electrode film and the second electrode film are configured to be press-fit connected by an external force.

The first electrode film and the second electrode film are attached to the metal current collector. The first electrode film and the second electrode film are connected to each other at positions corresponding to the pores.

Optionally, a carbon layer is arranged on a surface of the metal current collector.

Optionally, a metal lithium layer is arranged on a surface of the metal current collector.

Optionally, the metal current collector includes a plurality of metal wires, the plurality of metal wires are arranged in an array, and adjacent metal wires are spaced apart from each other.

Optionally, the metal wires are arranged to intersect to form a network structure, and gaps are formed between the plurality of the metal wires to constitute the pores, and the pores are polygonal.

Optionally, a side length of the pore is 5 µm to 500 µm.

Optionally, the plurality of the metal wires are arranged in parallel, and the pore is formed between any two adjacent metal wires.

Optionally, a spacing between adjacent metal wires is 5 µm to 500 µm.

Optionally, a diameter of the metal wire is 1 µm to 100 µm.

Optionally, the metal current collector and the self-supporting electrode film are configured to be fixedly connected by hot rolling.

One technical effect of the embodiments of the present disclosure is as follows. The energy density of the battery and the electrical conductivity of the battery electrode plate are improved without requiring additional procedures for processing the battery electrode plate.

A second aspect of the present disclosure provides a battery, including the dry battery electrode plate according to the first aspect.

Other features and advantages of the present disclosure will become apparent from the following detailed description of exemplary embodiments of the present disclosure with reference to the drawings.

### BRIEF DESCRIPTION OF THE DRAWINGS

Accompanying drawings are incorporated into and constitute a part of this specification, show embodiments that conform to the present disclosure, and are used together with this specification to describe the principle of the present disclosure.
FIG. 1 is a specific schematic structural diagram of Embodiment 1 of a dry battery electrode plate according to an embodiment of the present disclosure; and
FIG. 2 is a specific schematic structural diagram of Embodiment 2 of a dry battery electrode plate according to an embodiment of the present disclosure.

In the drawings: 1 - metal current collector; 11 - metal wire; 12 - pore; 2 - self-supporting electrode film.

### DETAILED DESCRIPTION

Various exemplary embodiments of the present disclosure are now be described in detail with reference to the accompanying drawings. It should be noted that unless otherwise specified, opposite arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but where appropriate, the techniques, the methods, and the devices should be considered as a part of the specification.

In all examples shown and discussed herein, any specific value should be construed as merely exemplary and not as limitations. Therefore, other examples of exemplary embodiments may have different values.

It should be noted that like numerals and letters denote like terms in the following drawings. Therefore, once an item is defined in one accompanying drawing, the item does not need to be further discussed in the subsequent accompanying drawings.

A dry battery electrode plate is provided, including a metal current collector 1 and a self-supporting electrode film 2.

The metal current collector 1 is made of a metal material such as Cu, Al, Ni, Fe, etc. The metal current collector 1 is provided with pores 12. The pores 12 run through the metal current collector 1. The pores 12 are configured for solid, gas, and liquid materials to pass through the metal current collector 1.

The metal current collector 1 may be a complete piece of metal material provided with pores 12, or may be formed by metal materials arranged in an array, with the pores 12 being formed between the metal materials.

Two sides of the metal current collector 1 are each provided with the self-supporting electrode film 2. The self-supporting electrode film 2 includes a first electrode film and a second electrode film. The first electrode film is arranged on one side of the metal current collector 1. The second electrode film is arranged on one side of the metal current collector 1 facing away from the first electrode film. One side of each of the first electrode film and the second electrode film close to the metal current collector 1 is attached to the metal current collector 1.

The first electrode film and the second electrode film are configured to be press-fit connected by an external force. After the first electrode film and the second electrode film are compressed by a force, the side of the first electrode film attached to the metal current collector 1 and the side of the second electrode film attached to the metal current collector 1 are connected to each other at positions corresponding to the pores 12. The metal current collector 1 is located between the first electrode film and the second electrode film, thereby achieving connection between the first electrode film, the second electrode film, and the metal current collector 1.

Through the arrangement of the pores 12 on the metal current collector 1, when the self-supporting electrode film 2 is press-fit by a force, the first electrode film and the second electrode film are deformed to connect to each other through the pores 12. In addition, it is not necessary to consider whether thicknesses of the first electrode film and the second electrode film are the same, and the first electrode film and the second electrode film will be uniformly dispersed through the pores 12 during the press-fit process.

The self-supporting electrode film 2 is prepared by a dry process. First, an electrode material, a conductive agent, a binder, and other raw materials are mixed and dispersed to form a dough-like composite slurry. Then, the composite slurry is extruded and calendered to form a continuous self-supporting electrode film 2.

The electrode material includes a positive electrode material and a negative electrode material. The positive electrode material is selected from at least one of LiCoO₂, LiNiO₂, LiCoₓNi₁₋ₓO₂ (where 0≤x≤1), LiCoₓNi_{1-x-y}Al_{y}O₂ (where 0≤x≤1, and 0≤y≤1), LiMn₂O₄, LiFeₓMn_{y}M_{z}O₄ (where M is at least one of Al, Mg, Ga, Cr, Co, Ni, Cu, Zn, or Mo, 0≤x≤1, 0≤y≤1, 0≤z≤1, and x+y+z=1), Li₁₊ₓL_{1-y-z}M_{y}N_{z}O₂ (where L, M, and N are each independently at least one of Li, Co, Mn, Ni, Fe, Al, Mg, Ga, Ti, Cr, Cu, Zn, Mo, F, I, S, or B, -0.1<x<0.2, 0≤y≤1, 0≤z≤1, and 0≤y+z≤1), LiFePO₄, Li₃V₂(PO₄)₃, Li₃V₃(PO₄)₃, LiVPO₄F, Li₂CuO₂, Li₅FeO₄, a metal sulfide (e.g., TiS₂, V₂S₃, FeS, FeS₂, or LiMSₓ (where M is at least one of transition metal elements such as Ti, Fe, Ni, Cu, and Mo, and 1≤x≤2.5)), and an oxide (e.g., TiO₂, Cr₃O₈, V₂O₅, or MnO₂).

The negative electrode material is selected from one or more of a carbon material, Si, SiOₓ (0.1<x<1.5), Si-C, SiOₓ-C (0.1≤x≤1.5), Li₄Ti₅O₁₂, tin alloy, silicon alloy, silicon, tin, germanium, or indium. The above materials are negative electrode active materials in which lithium intercalation may occur in the art.

The conductive agent is selected from at least one of carbon black, conductive graphite, carbon nanotubes, carbon fibers, and graphene.

The binder is selected from at least one of the following materials:
1. fluoropolymers (PTFE), and polyolefins (polyethylene (PE), polypropylene (PP), polyvinylidene fluoride (PVDF) copolymers, and/or mixtures thereof);
2. composite binders, including: PTFE and polyolefins, polyethers, polyether precursors, polysiloxanes, polysiloxanes and copolymers thereof; PTFE and branched polyethers, polyvinyl ethers and copolymers thereof; or PTFE and polyethylene oxide (PEO), polyphenylene ether (PPO), polyethylene-block-poly(ethylene glycol), polydimethylsiloxane (PDMS), poly(dimethylsiloxane-co-alkylmethylsiloxane) and combinations thereof;
3. thermoplastic materials, including polymeric copolymers, olefin oxides, rubber, styrene-butadiene rubber, acrylonitrile-butadiene rubber, polyisobutylene, polyvinyl ester, polyvinyl acetate, polyacrylate, fluorocarbon polymers, etc.

In the present disclosure, the pores 12 are provided on the metal current collector 1, and a dry process is used to prepare the self-supporting electrode film 2. The first electrode film, the metal current collector 1, and the second electrode mold are laminated, and then press-fit by an external force, so that the first electrode film and the second electrode film are connected to each other through the pores 12 on the metal current collector 1, to obtain the battery electrode plate.

In the battery electrode plate of the present disclosure, because the metal current collector 1 is provided with the pores 12, the metal current collector 1 accounts for a smaller proportion in the whole battery electrode plate, and the self-supporting electrode film 2 made of the electrode material accounts for a higher proportion, so that the energy density of the whole battery electrode plate is improved.

Because a solvent is used in a wet molding process, the solvent and the binder form a binder layer, and particles of the conductive agent are completely surrounded by the binder layer, hindering the contact between the particles of the conductive agent and between the particles of the conductive agent and particles of the electrode material, and resulting in a poor electrical conductivity of the battery electrode plate. In addition, the residual solvent in the battery electrode plate undergoes side reactions with the electrolyte solution, leading to the degradation of the battery performance, such as capacity reduction, gas generation, shortening of the service life, etc.

In a dry molding process, no solvent is used, and the binder exists in a fiber state, allowing for a closer contact between the particles of the conductive agent and between the particles of the electrode material and the particles of the conductive agent, thereby achieving a high energy density, good electrical conductivity, and high capacity of the battery electrode plate. In addition, the battery electrode plate prepared by the dry process has better cohesion and adhesion performance in the presence of a high temperature electrolyte solution.

Preparation of an electrode plate of a battery by a wet process includes five steps: slurry preparation, slurry coating, electrode plate rolling, electrode plate cutting, and electrode plate drying. Electrode plate rolling is used for compacting an electrode material coated on a surface of a current collector of the battery. In the process of electrode plate rolling, the slurry layer is stretched to produce stress, leading to the stretching of the current collector after rolling. As a result, the electrode plate is likely to curl.

For the dry battery electrode plate provided by the present disclosure, because the self-supporting electrode film 2 bears more pressure when a large external force is applied for press-fit, there is no need to consider the problems of foil extension and wrinkling. Therefore, a higher compaction density can be achieved, thereby improving the structural stability of the battery electrode plate.

Further, because the first electrode film and the second electrode film are press-fit connected by the external force, adhesion using an adhesive is not required, thereby reducing processing steps and improving the processing efficiency.

Optionally, a carbon layer is arranged on a surface of the metal current collector 1. The carbon layer adopts one or more of non-graphitized carbon, graphite, carbon obtained by high-temperature oxidation of polyacetylene polymer materials, pyrolytic carbon, coke, organic polymer sintered matter, or activated carbon.

The surface of the metal current collector 1 is coated with the carbon layer, and the carbon layer covers the whole surface of the metal current collector 1, thereby facilitating the electrical contact between the metal current collector 1 and the self-supporting electrode film 2, and improving the overcurrent performance of the battery electrode plate.

Optionally, a metal lithium layer is arranged on a surface of the metal current collector 1.

Usually, when the battery electrode plate is used as a negative electrode, a layer of metal lithium is plated on the surface of the metal current collector 1. The metal lithium covers the whole surface of the metal current collector 1. After injection of an electrolyte solution, the lithium metal is intercalated in the negative electrode to realize the pre-lithiation of the battery electrode plate.

Optionally, the metal current collector 1 includes a plurality of metal wires 11, the plurality of metal wires 11 are arranged in an array, and adjacent metal wires 11 are spaced apart from each other.

In a dry battery electrode plate, the metal current collector 1 is formed by a plurality of metal wires 11 arranged in an array, adjacent metal wires 11 are spaced apart from each other, and a gap is formed between adjacent metal wires 11 to form the pore 12. Compared with the manner where pores 12 are opened in the metal current collector 1, in the metal current collector 1 formed by the metal wires 11 arranged in an array, the metal wires 11 occupy a smaller volume, the formed metal current collector 1 occupies a smaller volume in the whole battery electrode plate, and the self-supporting electrode film 2 occupies a larger volume, thereby achieving a higher energy density of the battery electrode plate.

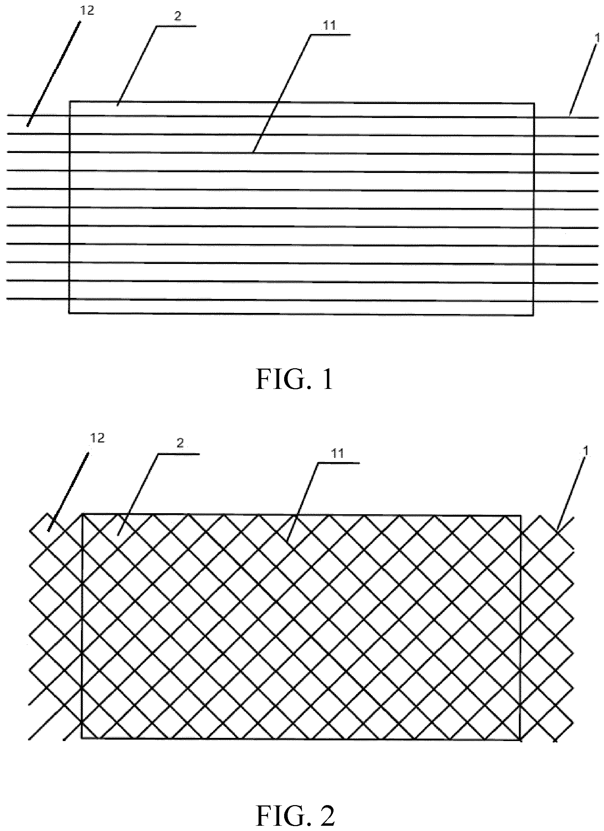

Optionally, referring to FIG. 2, the metal wires 11 are arranged to intersect to form a network structure. The metal wires 11 include transverse and longitudinal metal wires intersecting each other. The transverse and longitudinal metal wires 11 may be woven to intersect to form a mesh structure, or may be laminated to intersect to form a mesh structure.

Referring to FIG. 2, closed pores 12 are formed between the plurality of metal wires 11, and the pores 12 are polygonal. In this embodiment, the metal current collector 1 is a mesh structure formed by a plurality of transverse metal wires 11 and longitudinal metal wires 11 intersecting each other, a gap is formed between any two transverse metal wires 11 and any two longitudinal metal wires 11. The gaps forms the pore 12, and the pore 12 is quadrilateral. An included angle between two metal wires 11 in different directions is 10° to 90°. When the included angle between the metal wires 11 is 10° to 90°, the pore 12 is of a rhomboid structure.

Optionally, a side length of the pore 12 is 5 µm to 500 µm, that is, lengths of the transverse metal wires 11 and the longitudinal metal wires 11 constituting the pore 12 ranges from 5 µm to 500 µm.

Optionally, the side length of the pore 12 is 5 µm to 200 µm.

An area of the pore 12 is related to a connection area between the first electrode film and the second electrode film. When the side length of the pore 12 ranges from 5 µm to 200 µm, an effective connection area can be achieved between the first electrode film and the second electrode film, thereby ensuring the stability of connection between the first electrode film and the second electrode film.

Moreover, when the side length of the pore 12 ranges from 5 µm to 200 µm, distances between the plurality of metal wires 11 defining the pores 12 is small, i.e., the plurality of metal wires 11 defining the pores 12 can be kept in a dense arrangement structure, and the number of metal wires 11 connected to the self-supporting electrode film per unit area can ensure the structural stability of the metal current collector 1.

Optionally, referring to FIG. 1, the plurality of the metal wires 11 are arranged in parallel, and the pore 12 is formed between any two adjacent metal wires 11. The metal current collector 1 is formed by a plurality of parallel metal wires 11. In this case, a gap between adjacent metal wires 11 is the pore 12. The plurality of metal wires 11 are arranged side by side between the first electrode film and the second electrode film, and are press-fit by an external force to form the battery electrode plate.

Optionally, a spacing between adjacent metal wires 11 is 5 µm to 500 µm.

Optionally, a spacing between adjacent metal wires 11 is 5 µm to 200 µm.

When the spacing between adjacent and parallel metal wires 11 is within this range, the strength of the metal current collector 1 can be ensured, the volume ratio of the metal current collector 1 to the battery electrode plate can be reduced, and the volume ratio of the self-supporting electrode film 2 to the battery electrode plate can be increased, thereby improving the energy density of the battery electrode plate.

Optionally, a diameter of the metal wire 11 is 1 µm to 100 µm.

Optionally, the diameter of the metal wire 11 is 5 µm to 50 µm.

When the diameter of the metal wire 11 is within this range, good mechanical properties can be achieved, and the volume ratio of the metal current collector 1 formed by the metal wires 11 to the battery electrode plate can be reduced, and the volume ratio of the self-supporting electrode film 2 to the battery electrode plate can be increased, thereby improving the energy density of the battery electrode plate.

Optionally, the metal current collector 1 and the self-supporting electrode film 2 are configured to be fixedly connected by hot rolling. The first electrode film, the metal current collector 1, and the second electrode film are laminated in sequence, hot-rolled by a roller press, and cooled to obtain the dry battery electrode plate.

The dry battery electrode plate prepared by hot rolling has the following advantages.
1. Moisture in the self-supporting electrode film 2 is reduced during heating, so that after the self-supporting electrode film 2 and the metal current collector 1 are press-fit connected, the battery electrode plate material is less likely to rebound to affect the performance of the battery electrode plate.
2. During heating, vibration of the binder molecules on the surface of the self-supporting electrode film 2 is strengthened, the spacing between molecules becomes smaller, the adhesion strength is enhanced, and the self-supporting electrode film 2 is more tightly connected to the metal current collector 1. Therefore, the adhesion strength between the self-supporting electrode film 2 and the metal current collector 1 can be increased by hot rolling.

A battery is provided, including the dry battery electrode plate described above.

Specifically, for the dry battery electrode plate in the battery provided by the present disclosure, because the self-supporting electrode film 2 bears more pressure when a large external force is applied for press-fit, there is no need to consider the problems of foil extension and wrinkling. Therefore, a higher compaction density can be achieved, thereby improving the structural stability of the battery electrode plate, and ensuring the capacity and stability of the battery.

Although some specific embodiments of the present disclosure have been described in detail by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of protection of the present disclosure is defined by the appended claims.

## Claims

1. A dry battery electrode plate, comprising:
a metal current collector (1), the metal current collector (1) being provided with pores (12); and
a self-supporting electrode film (2), the self-supporting electrode film (2) comprising a first electrode film and a second electrode film, the first electrode film being arranged on one side of the metal current collector (1), and the second electrode film being arranged on one side of the metal current collector (1) facing away from the first electrode film;
the first electrode film and the second electrode film being configured to be press-fit connected by an external force;
the first electrode film and the second electrode film being attached to the metal current collector (1), and the first electrode film and the second electrode film being connected to each other at positions corresponding to the pores (12).

2. The dry battery electrode plate according to claim 1, wherein a carbon layer is arranged on a surface of the metal current collector (1).

3. The dry battery electrode plate according to claim 1 or 2, wherein a metal lithium layer is arranged on a surface of the metal current collector (1).

4. The dry battery electrode plate according to any one of claims 1 to 3, wherein the metal current collector (1) comprises a plurality of metal wires (11), the plurality of metal wires (11) are arranged in an array, and adjacent metal wires (11) are spaced apart from each other.

5. The dry battery electrode plate according to any one of claims 1 to 4, wherein the metal wires (11) are arranged to intersect to form a network structure, and gaps are formed between the plurality of the metal wires (11) to constitute the pores (12), and the pores (12) are polygonal.

6. The dry battery electrode plate according to any one of claims 1 to 5, wherein a side length of the pore (12) is 5 µm to 500 µm.

7. The dry battery electrode plate according to any one of claims 1 to 6, wherein the plurality of the metal wires (11) are arranged in parallel, and the pore (12) is formed between any two adjacent metal wires (11).

8. The dry battery electrode plate according to any one of claims 1 to 7, wherein a spacing between adjacent metal wires (11) is 5 µm to 500 µm.

9. The dry battery electrode plate according to any one of claims 1 to 8, wherein a diameter of the metal wire (11) is 1 µm to 100 µm.

10. The dry battery electrode plate according to any one of claims 1 to 9, wherein the metal current collector (1) and the self-supporting electrode film (2) are configured to be fixedly connected by hot rolling.

11. A battery, comprising the dry battery electrode plate according to any one of claims 1 to 10.
